# EUROPÄISCHE PATENTANMELDUNG

(11) **EP 1 342 606 A1**
(43) Veröffentlichungstag der Anmeldung: **10.09.2003**
(21) Anmeldenummer: 02004845.0
(22) Anmeldetag: 04.03.2002
(51) Int. Cl.: B60K 37/06, B60Q 1/14

(54) **Vorrichtung und Verfahren zur Steuerung einer Bildschirmanzeige**

(71) Anmelder: Ford Global Technologies, Inc., A subsidiary of Ford Motor Company, Dearborn, Michigan 48126 (US)
(72) Erfinder: Schmitz, Stephan, 50672 Köln (DE); Knopke, Andreas, 41541 Dormagen (DE)
(74) Vertreter: Drömer, Hans-Carsten, Dipl.-Ing.

(57) **Zusammenfassung**

Die Erfindung betrifft eine Vorrichtung und ein Verfahren zur Steuerung einer Bildschirmanzeige (15), insbesondere für ein Kraftfahrzeug, zur Auswahl von Menüpunkten (18), mit zumindest einem Bedienhebel (1) und zumindest einem Bildschirm (14), wobei die Bildschirmanzeige (15) mit dem Bedienhebel (1) gesteuert werden kann. Sie ist dadurch gekennzeichnet, dass der Bedienhebel (1) ein gegenüber dem Bedienhebel (1) drehbares Bedienrad (8) zur Steuerung der Bildschirmanzeige (15) aufweist. Mittels des Bedienrades (8) wird eine Bildschirmmarkierung (19) auf entsprechende Menüpunkte (15) der Bildschirmanzeige (15) verschoben und kann durch Schalterbetätigung am Bedienhebel (1) ausgewählt werden. Das Bedienrad ist mit einem haptischem Drehsteller (13) gekoppelt, wodurch beliebige Rastfunktionen des Bedienknopfes (8) erzeugt werden können, abhängig von der jeweiligen Bildschirmanzeige (15) und der Stellung der Bildschirmmarkierung (19). Vorteil der Erfindung ist die einfachere Bedienung menügesteuerter Bildschirmanzeigen.

## Beschreibung

Die Erfindung bezieht sich auf eine Vorrichtung und ein Verfahren zur Steuerung einer Bildschirmanzeige, insbesondere für ein Kraftfahrzeug, zur Auswahl von Menüpunkten, gemäß dem Oberbegriff des Patentanspruches 1.

Aus der JP10274541 und der JP 10274543 ist eine gattungsbildende Vorrichtung bekannt. Mittels eines in verschiedene Richtungen beweglichen Bedienhebels, der mehrer Schalter und Drehknöpfe aufweist, können auf einem Bildschirm verschiedenste Menüs angewählt und unter den Menüpunkten entsprechende Fahrzeugfunktionen ausgewählt und gesteuert werden. Solche Fahrzeugfunktionen sind unter anderem die Bedienung von Klimaanlage, Navigationssystem, Radio und CD-Spieler. Dabei erfolgt die Steuerung der Bildschirmmarkierung, das kann z. B. die Bewegung eines Zeigers auf dem Bildschirm sein, oder die Bewegung eines optisch hervorgehobenen Bereiches auf dem Bildschirm, mittels eines Schiebeschalters, während durch die Bewegung des Bedienhebels selbst die Auswahl des markierten Menüs bzw. Funktion erfolgt. Die möglichen Bewegungen des Bedienhebels sind dabei die Drehung des Bedienhebels um seinen Aufhängepunkt, daraus resultieren Verschiebungen quer zu seiner Längsachse, z. B. Hoch-Runter, Vor-Zurück, weiterhin die Drehung des Bedienhebels um seine eigene Längsachse, und die Verschiebung in Richtung seiner Längsachse. Je nach zu steuernder Funktion kann dabei jeder Bewegung eine bestimmte Steuer- und oder Auswahlfunktion zugeordnet werden. Der Bedienhebel kann sowohl am Lenkstock als auch an der Mittelkonsole oder am Armaturenbrett angeordnet sein.

Nachteilig bei dieser Anordnung ist die große Komplexität des Bedienhebels. Aufgrund der Vielzahl von Schaltern, Knöpfen und Bewegungsmöglichkeiten des Bedienhebels selbst ist eine klare Zuordnung der Steuerfunktionen des Bedienhebels für den ungeübten Bediener kaum intuitiv zu erfassen.

Aufgabe der Erfindung ist es deshalb, eine Vorrichtung und ein Verfahren zur Steuerung einer Bildschirmanzeige so zu verbessern, dass die Steuerung auch für den ungeübten Bediener einfach zu erfassen und zu betätigen ist.

Gelöst wird diese Aufgabe mit den Merkmalen des Patenspruches 1 bzw. 9.

Indem der Bedienhebel ein gegenüber dem Bedienhebel drehbares Bedienrad zur Steuerung der Bildschirmanzeige aufweist, kann auf einfache Weise und für jeden Bediener einfach erfassbar die Bildschirmanzeige gesteuert werden. Entweder wird die Bildschirmmarkierung einfach entsprechend der Stellung des Bedienrades auf dem Bildschirm nach oben oder unten bzw. nach links oder nach rechts verschoben. Oder die Menüpunkte werden entsprechend der Stellung des Bedienrades unter einer auf der Bildschirmanzeige feststehenden Bildschirmmarkierung hinweg nach oben oder unten bzw. nach links oder nach rechts verschoben. Diese direkte Zuordnung zwischen Stellung des Bedienrades und Position der Bildschirmmarkierung bzw. der Menüpunkte ermöglicht eine schnelle und direkte Markierung der Menüpunkte, ohne dass der Bediener mühsam die Markierung von Menüpunkt zu Menüpunkt mittels Schalterbetätigung durchführen muß.

In einer vorteilhaften Ausführung ist das Bedienrad frei drehbar ohne Anschlagsbegrenzung gegenüber dem Bedienhebel angeordnet. Ein solches Bedienrad ist geeignet, die Bildschirmmarkierung beliebig oft in eine Richtung durch die Bildschirmanzeige laufen zu lassen, ohne Rücksicht auf die augenblickliche Stellung der Bildschirmmarkierung oder des Bedienrades. Oder die Menüpunkte können beliebig oft unter der feststehenden Bildschirmmarkierung durchlaufen in Form einer Endlosschleife, wobei die Anzahl der Menüpunkte natürlich endlich ist. Bei Aufruf eines neuen Menüpunktes kann die Bildschirmmarkierung unabhängig von der Stellung des Bedienrades immer auf einen bestimmten Menüpunkt, oder auf den letzten ausgewählten Menüpunkt in diesem Menü, gesetzt werden, ohne dass eine Rückstellung des Bedienrades notwendig ist.

Die freie Drehbarkeit des Bedienrades ermöglicht es auch, dass wenn die Bildschirmmarkierung eine Endposition auf der Bildschirmanzeige erreicht hat, bei weiterem Drehen des Bedienrades Menüpunkte unter der dann in der Endposition feststehenden Bildschirmmarkierung hinweg verschoben werden. Völlig unabhängig von der Stellung des Bedienrades wird der Bediener so darauf aufmerksam gemacht, dass er die Endposition des Menüs erreicht hat. Sobald er wieder eine Menüebene zurückspringt, befindet sich die Bildschirmanzeige automatisch wieder im Ausgangszustand oder im zuletzt benutzen Menü, unabhängig von der Stellung des Bedienrades.

In einer weiteren vorteilhaften Ausführung ist das Bedienrad mit einem haptischen Drehsteller gekoppelt. Der haptische Drehsteller kann dabei jede Vorrichtung sein, die es ermöglicht, auf das Bedienrad eine beliebige Kraft wirken zu lassen, so dass der Bediener eine sich ändernde Leicht- bzw. Schwergängigkeit des Bedienrades erfährt. Z. B. kann der haptische Drehsteller ein Elektromotor sein, wobei die Achse des Elektromotors drehfest mit dem Bedienrad gekoppelt ist. Dann kann der haptische Drehsteller sowohl aktiv die Drehbewegung unterstützen oder auch bremsen, z. B. zur Erzeugung virtueller Rastfunktionen. Oder der haptische Drehsteller ist eine zu aktivierende Bremse für das Bedienrad, z. B. indem z.B. ein Elektromagnet auf eine mit dem Bedienrad drehfest verbundene Metallscheibe wirkt.

Die Aufgabe des haptischen Drehstellers ist es, dem Bediener durch Drehunterstützung, Drehbehinderung oder völlige Drehblockade des Bedienrades eine Rückmeldung über seine Markierung auf dem Bildschirm zu geben. Dabei sind diese Funktionen nicht an eine bestimmte Winkelstellung des Bedienrades geknüpft, wie es z. B. bei konventionellen Rastvorrichtungen der Fall ist, sondern die Funktion des haptischen Drehstellers kann im Zusammenhang mit der Bildschirmanzeige in jeder beliebigen Stellung des Bedienrades immer dann aktiviert werden, wenn es zur einfacheren Bedienung oder besseren Verständnis der Bildschirmänzeige erforderlich ist.

Vorteilhaft kann dies angewendet werden, wenn bei der Steuerung der Bildschirmanzeige durch Drehung des Bedienrades der mit dem Bedienrad gekoppelte haptische Drehsteller mit unterschiedlicher Intensität, die abhängig ist von der Stellung der Bildschirmmarkierung und der Menüpunkte zueinander, die Drehbewegung des Bedienrades unterstützt und/oder ihr entgegenwirkt. Damit kann ein beliebiges Rastung des Bedienrades erzeugt werden, indem z. B. die Bildschirmmarkierung auf den Menüpunkten einrasten und die Verschiebung der Menüpunkte bzw. der Bildschirmmarkierung aus der genauen Markierungslage dann eine gewisse Kraft am Bedienrad erfordert.

Weiterhin kann dies vorteilhaft angewendet werden, wenn die Bildschirmmarkierung einen Menüpunkt, der das Ende einer Menüliste darstellt, markiert. Dann kann das Bedienrad darüber hinaus nur mit erhöhtem Kraftaufwand weitergedreht werden, indem der mit dem Bedienrad gekoppelte haptische Drehsteller der Drehbewegung entgegenwirkt. Der Benutzer erhält damit unmittelbar eine Rückmeldung von der Vorrichtung, dass seine Markierung den Randbereich der Menüliste erreicht hat, und er jetzt nur mit erhöhtem Kraftaufwand das Bedienrad weiterdrehen kann.

In einer weiteren erfinderischen Ausführung ist das Bedienrad in einer Ausnehmung im Bedienhebel angeordnet. Dabei kann der Bedienrad die Form eines Rändelrades aufweisen. Ist der Bedienhebel am Lenkstock angeordnet, kann die Hand am Lenkrad verbleiben und das Rändelrad ist mit dem Zeige- und Mittelfinger gut erreichbar. Weiterhin lässt sich die gesamte für den Bedienrad benötigte Mechanik und Elektronik bequem im Bedienhebel unterbringen.

Vorteilhaft bestehen einzelne Teile des Bedienhebels zumindest teilweise aus durchsichtigem Material. Wenn das Bedienrad Markierungen aufweist, die vom Gehäuse des - in diesem Bereich dann durchsichtigen Gehäuse - überdeckt sind, so sind die Markierungen für den Bediener sichtbar. Auch das Bedienrad selbst kann durchsichtig sein, so dass im Innern des Bedienhebels sichtbare Markierungen angeordnet sind. Ist das Bedienrad in einer dem Bediener abgewandten Ausnehmung angeordnet, kann der Bediener bei einem durchsichtigen Gehäuse das Bedienrad erkennen und findet es leichter.

Vorteilhaft sind im Bedienhebel Beleuchtungsmittel angeordnet. Sind einzelne Bereiche oder Teile des Bedienhebels durchsichtig, dies gilt auch wie bereits oben gesagt für das Bedienrad selbst, sind auch bei Dunkelheit die im vorherigen Absatz besprochenen Merkmale sichtbar.

Vorteilhaft ist der Bedienhebel für den Bediener justierbar. Damit kann zur bequemeren Handhabung des Bedienhebels der Bediener mit einem Feststellmechanismus ähnlich einer Lenkradverstellung den Bedienhebel für sich optimal einstellen. Dies ist z. B. sinnvoll, wenn der Abstand zum Lenkrad für einen Bediener zu groß ist, oder der Bedienhebel ist zu tief angeordnet, so dass der Bediener den Bedienhebel mit z. B. den Knien berührt.

In einer vorteilhaften Ausführung weist der Bedienhebel zumindest einen zusätzlichen Schalter auf; es können aber auch mehrere Schalter am Bedienhebel angeordnet sein. Durch Betätigung eines am Bedienhebel angeordneten Schalters können - neben anderen Funktionen - die von der Bildschirmmarkierung markierten Menüpunkte bzw. Funktionen ausgewählt werden. Die Bauform eines Schalters kann dabei beliebig sein, als Druck, Kipp- oder Schiebeschalter. Vorteilhaft ist zumindest ein Schalter an der Kopfseite des Lenkstockhebels angeordnet, aber prinzipiell ist jede Position für den oder die Schalter auf dem Bedienhebel möglich. Auch kann ein Schalter durch die Bewegung des Bedienhebels selbst betätigt werden.

Ein Schalter kann jede beliebige Funktion schalten, die im Zusammenhang mit der zu steuernden Bildschirmanzeige steht. Z. B. kann er dazu dienen, einen markierten Menüpunkt auszuwählen. Oder er dient als Rückstellschalter, der die gesamte Bildschirmanzeige in den Ursprungszustand zurückversetzt. Oder er dient dazu, ein Menü zurückzuspringen. Oder er schaltete die ganze Bildschirmanzeige ein oder aus. Oder er wechselt zwischen verschiedenen Menüs. Oder er übernimmt ganz oder teilweise die Funktion des Bedienrades, d. h. die Verschiebung der Bildschirmmarkierung auf die Menüpunkte, als Ersatz- oder als Ergänzung zum Bedienrad, um die Bedienung weiter zu vereinfachen.

In einer weiteren vorteilhaften Ausführung ist der Bedienhebel in zumindest eine Richtung verschieb- oder drehbar. Durch die Bewegung des Bedienhebels können - neben anderen Funktionen - die von der Bildschirmmarkierung markierten Menüs und/oder Funktionen ausgewählt werden, indem die Bewegung des Bedienhebels in ein Schaltsignal umgewandelt wird. Dies kann wie oben beschrieben, mittels eines Schalters erfolgen. Es sind aber auch andere Umsetzer, wie optische oder piezoelektrische Sensoren möglich, die eine Bewegung des Bedienhebels erkennen.

Die möglichen Bewegungen des Bedienhebels sind dabei die Drehung des Bedienhebels um seinen Aufhängepunkt, daraus resultieren Verschiebungen quer zu seiner Längsachse, z.B. Hoch-Runter, Vor-Zurück, weiterhin die Drehung des Bedienhebels um seine eigene Längsachse, und die Verschiebung in Richtung seiner Längsachse. Je nach zu steuernder Funktion kann dabei jeder Bewegung eine bestimmte Steuer- und oder Auswahlfunktion zugeordnet werden. Dabei ergeben sich, abhängig von der Bewegungsmöglichkeit des Bedienhebels, weitere Steuermöglichkeiten, die in Verbindung mit den im vorherigen Absatz beschriebenen Schalter eine Vielzahl von Steuermöglichkeiten zulassen.

Weitere vorteilhafte Ausführungen der Erfindung sind den Zeichnungen zu entnehmen. Es zeigen:
- Fig. 1:: eine Schnittansicht eines Bedienhebels von oben;
- Fig. 2:: eine Schnittansicht eines Bedienhebels von der Seite;
- Fig. 3:: eine Ansicht eines Hauptmenüs einer Bildschirmanzeige;
- Fig. 4:: eine Ansicht eines Untermenüs einer Bildschirmanzeige; und
- Fig. 5:: eine Ansicht einer Funktionsebene einer Bildschirmanzeige.

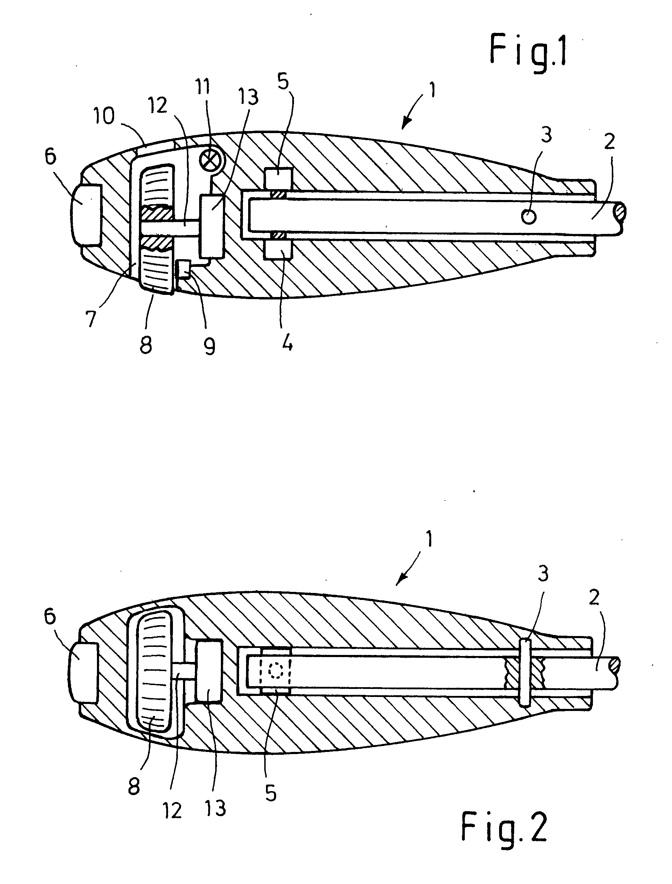

Figur 1 und Figur 2 zeigen Schnittansichten des Bedienhebels 1, wobei Figur 1 eine Schnittansicht von oben und Figur 2 eine Schnittansicht von der Seite ist. Der Bedienhebel 1 ist auf einer fahrzeugfesten Befestigungsachse 2 angeordnet, wobei die Verbindung der beiden über die Drehachse 3 erfolgt, so dass der Bedienhebel 1 gegenüber der Befestigungsachse 2 um die Drehachse 3 schwenkbar ist. Diese mögliche Schwenkbewegung wird begrenzt durch zwei Tastschalter 4 und 5, die sich beidseitig der Befestigungsachse 2 befinden, so dass bei einer Schwenkbewegung des Bedienhebels 1, je nach Schwenkrichtung, einer der beiden Tastschalter 4 oder 5 betätigt wird. Als weiteren Schalter weist der Bedienhebel an seiner Stirnseite einen Drucktaster 6 auf, mittels welchem zusätzliche Steuersignale erzeugt werden können.

In der Ausnehmung 7 im Bedienhebel 1 ist das gegenüber dem Bedienhebel 1 drehbare Bedienrad 8 angeordnet. Über eine Auswerteelektronik 9 wird die relative Drehung des Bedienrades 8 gegenüber dem Bedienhebel 1 erfaßt. Zur besseren Bedienbarkeit durch den Bediener ist das Bedienrad 8 von der dem Bediener abgewandten Seite zu bedienen, ragt also auch nur auf dieser Seite aus dem Bedienhebel 1 heraus. Damit der Bediener das Bedienrad 8 besser lokalisiert, ist auf der dem Bediener zugewandten Seite im Bereich der Ausnehmung 7 ein durchsichtiges Sichtfenster 10 angeordnet, durch welches der Bediener das Bedienrad 8 sehen kann. Damit der Bedienrad 8 auch bei Dunkelheit gesehen wird, sind im Bedienhebel Beleuchtungsmittel 11 angeordnet, die das Bedienrad 8 im Bereich des Sichtfensters 10 beleuchten.

Das Bedienrad 8 selbst ist drehfest auf der Achse 12 des haptischen Drehstellers 13, der hier ein Elektromotor ist, angeordnet. Der haptische Drehsteller 13 erhält seine Steuerbefehle von einer hier nicht dargestellten Steuereinheit, die die Steuersignale des Bedienhebels 1 verarbeitet. Die Rastfunktion für das Bedienrad 8 wird erreicht, indem der Elektromotor als Motor - dann ist das Bedienrad besonders leichtgängig - oder als Generator - dann ist das Bedienrad schwergängig - angesteuert ist. Es versteht sich von selbst, dass die induzierten Signale, die der Elektromotor aufgrund einer Drehbetätigung des Bedienrades 8 erzeugt, ebenfalls zur Steuerung der Bildschirmanzeige verwendet werden können.

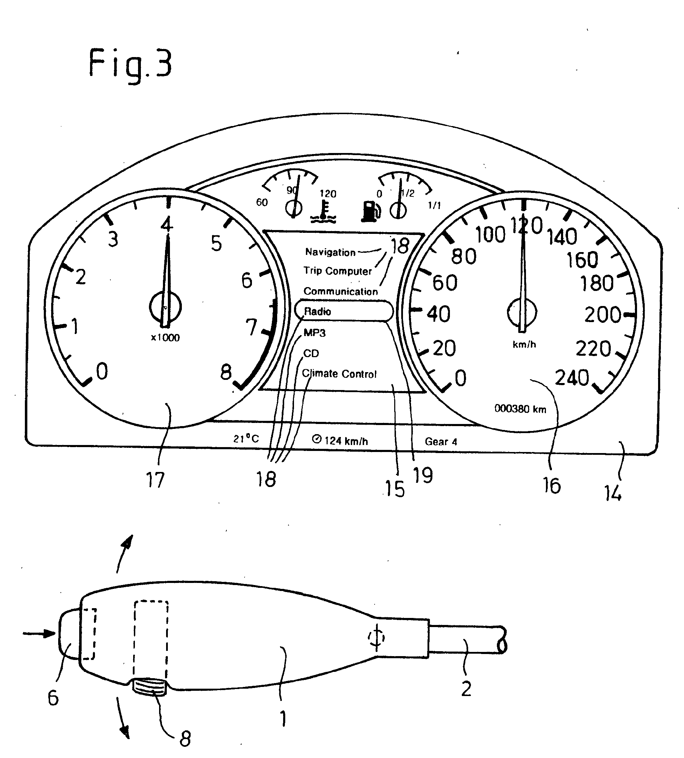

Figur 3 zeigt einen Bildschirm 14 mit einer Bildschirmanzeige 15, wobei der Bildschirm 14 im Blickfeld des Bedieners angeordnet ist und auf dem Bildschirm 14 auch ein Tachometer 16 und ein Drehzahlmesser 17 abgebildet sind. Die Bildschirmanzeige 15 nimmt dabei nur einen Teil des Bildschirmes 14 ein. Mittels des, in der Figur 3 schematisch dargestellten Bedienhebels 1 läßt sich die Bildschirmanzeige 15 bedienen und steuern. In dieser Ausführung ist der Bedienhebel 1 am nicht dargestellten Lenkstock angeordnet. Der Bedienhebel 1 ist so geformt, dass die linke Hand des Bedieners, der hier der Fahrer ist, am Lenkrad verbleiben kann und das Bedienrad 8 mit dem Zeige- und Mittelfinger gut erreichbar ist, indem das Bedienrad 8 zur dem Bediener abgewandten Seite aus dem Bedienhebel 1 ragt.

Durch Drehen des Bedienrades 8 werden die einzelnen Menüpunkte 18 unter der Bildschirmmarkierung 19, diese ist hier durch einen hervorgehobenen weißen Rand erkennbar, hinweg verschoben. Dies vereinfacht die Lesbarkeit, da sich der auszuwählende Menüpunkt 18 immer an derselben Stelle, d. h. der feststehenden Bildschirmmarkierung 19, befindet. Hier ist der markierte Menüpunkt 18 die Steuerung des Radios.

Die Bestätigung eines ausgewählten Menüpunktes 18, auf dem gerade die Bildschirmmarkierung 19 steht, erfolgt durch Heranziehen des Bedienhebels 1 an den Bediener, wodurch der Tastschalter 4, dargestellt in Figur 1, betätigt wird. Durch Wegdrücken des gesamten Bedienhebels 1 vom Bediener, bei dem der andere Tastschalter 5 betätigt wird, springt die Bildschirmanzeige 15 um eine Menüebene zurück.

Der Drucktaster 6 an der Stirnseite des Bedienhebels 1 hat eine Rückstellfunktion, d. h. bei Betätigung dieses Drucktasters 6 springt die Bildschirmanzeige 15 direkt in das Hauptmenü zurück. Hierdurch wird sichergestellt, dass der Bediener auf einfache Weise immer sofort in die Ausgangslage, d. h. das Hauptmenü, zurückgelangt, ohne sich mühsam durch einzelne Untermenüs zurückzuschalten.

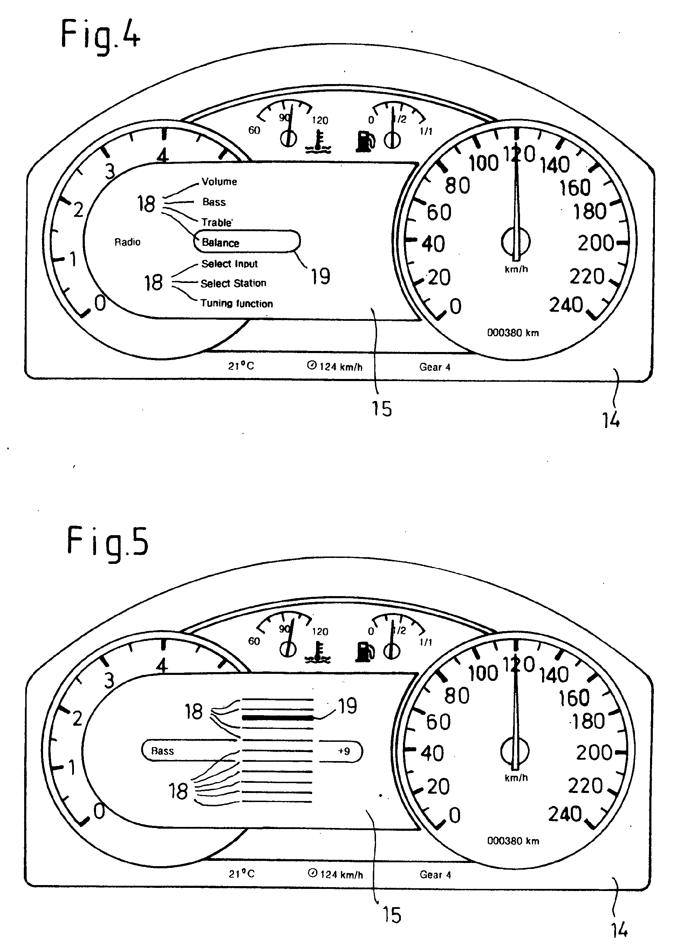

In Figur 4 ist ein Untermenü einer Bildschirmanzeige 15 dargestellt, welches erscheint, wenn im Hauptmenü dieses ausgewählt wurde. In diesem Untermenü, hier ist ebenfalls die Bedienung des Radios dargestellt, wird das Bedienkonzept vom Hauptmenü beibehalten. Durch Drehen des Bedienrades 8 können die verschiedenen Menüpunkte 18 unter der Bildschirmmarkierung 19 hinweggedreht werden. Ein erneuter Zug am Bedienhebel 1 bestätigt die Auswahl und die Bildschirmanzeige 15 springt in die Funktionsebene.

In Figur 5 ist eine Funktionsebene einer Bildschirmanzeige 15 gezeigt, hier die Bassregelung eines Radios. In diesem Fall wird die Bildschirmmarkierung 19 über feststehende Menüpunkte 18 verschoben. Sobald die gewünschte Einstellung der Funktion markiert ist, wird diese Einstellung durch die Zugbetätigung des Bedienhebels 1 bestätigt und die Bildschirmanzeige springt automatisch auf das nächsthöhere Untermenü.

Die hier vorgestellte Erfindung ist nicht auf die dargestellten Ausführungsbeispiele beschränkt. Insbesondere ist als Bildschirm jede optische Darstellungsform zu betrachten, die einem Bediener die Betrachtung der besagten Bildschirmanzeige ermöglicht, wie z. B. Bildschirme in der Mittelkonsole eines Fahrzeuges, Bildschirme im oder am Armaturenbrett, in Kopfstützen, am Dachhimmel angeordnet, Bildprojektionen auf die Windschutzscheibe, Head-Up Displays usw. Der Bedienhebel kann an jeder einem Bediener zugänglichen Stelle angeordnet sein, d. h. nicht nur am Lenkstock, sondern z. B. auch am Armaturenbrett, an der Mittelkonsole, an der Türverkleidung. Auch die Auswahl der zu steuernden Fahrzeugfunktionen ist nicht auf die hier besprochenen Funktionen beschränkt, vielmehr können alle vom Bediener zu steuernden Funktionen, auch solche, die nicht unmittelbar mit dem Fahrzeug verknüpft sind, z. B. Mobiltelefone, über die erfindungsgemäße Bedienvorrichtung gesteuert werden. Bezüglich der gezeigten Bildschirmanzeige von Hauptmenü, Untermenü und Funktionsebene ist der Anzahl von Untermenüs und weiteren Funktionsebenen ebenfalls keine Grenze gesetzt. Auch ist bei der Steuerung der Menüpunkte und der Bildschirmmarkierung jede Kombination aus den hier besprochenen Steuerungsverfahren möglich. Unter Bediener ist im wesentlichen der Fahrer des Fahrzeuges zu verstehen, aber auch ein Passagier des Fahrzeuges kann, sofern der Bedienhebel für ihn erreichbar angeordnet ist, Bediener des Bedienhebels sein. Auch können ein oder mehrere Bedienhebel speziell nur für Passagiere des Fahrzeuges vorgesehen sein, damit diese für Sie bestimmte Funktionen über eine Bildschirmanzeige steuern können.

## Patentansprüche

1. Vorrichtung zur Steuerung einer Bildschirmanzeige (15), insbesondere für ein Kraftfahrzeug, zur Auswahl von Menüpunkten (18), mit zumindest einem Bedienhebel (1) und zumindest einem Bildschirm (14), wobei die Bildschirmanzeige (15) mit dem Bedienhebel (1) gesteuert werden kann,
**dadurch gekennzeichnet, daß**
der Bedienhebel (1) ein gegenüber dem Bedienhebel (1) drehbares Bedienrad (8) zur Steuerung der Bildschirmanzeige (15) aufweist.

2. Vorrichtung nach Anspruch 1,
**dadurch gekennzeichnet, daß**
das Bedienrad (8) frei drehbar ohne Anschlagsbegrenzung gegenüber dem Bedienhebel (1) angeordnet ist.

3. Vorrichtung nach Anspruch 1 oder 2,
**dadurch gekennzeichnet, daß**
das Bedienrad (8) mit einem haptischen Drehsteller (13) gekoppelt ist.

4. Vorrichtung nach Anspruch 1, 2 oder 3,
**dadurch gekennzeichnet, daß**
das Bedienrad (8) in einer Ausnehmung (7) im Bedienhebel (1) angeordnet ist.

5. Vorrichtung nach Anspruch 1, 2 oder 3,
**dadurch gekennzeichnet, daß**
das Bedienrad (8) ringförmig gestaltet und drehbar auf dem Bedienhebel (1) angeordnet ist.

6. Vorrichtung nach einem der vorherigen Ansprüche,
**dadurch gekennzeichnet, daß**
einzelne Teile des Bedienhebels (1) zumindest teilweise aus durchsichtigem Material bestehen.

7. Vorrichtung nach Anspruch 6,
**dadurch gekennzeichnet, daß**
im Bedienhebel (1) Beleuchtungsmittel (13) angeordnet sind.

8. Vorrichtung einem der vorherigen Ansprüche,
**dadurch gekennzeichnet, daß**
der Bedienhebel (1) zumindest einen zusätzlichen Schalter (4, 5, 6) aufweist.

9. Vorrichtung nach einem der vorherigen Ansprüche,
**dadurch gekennzeichnet, daß**
der Bedienhebel (1) in zumindest einer Richtung verschieb-, dreh- oder schwenkbar ist.

10. Verfahren zur Steuerung einer Bildschirmanzeige (15), mit zumindest einem Bedienhebel (1) und zumindest einem Bildschirm (14), wobei mit dem Bedienhebel (1) die Bildschirmanzeige (15) auf dem Bildschirm (14) gesteuert werden kann,
**dadurch gekennzeichnet, daß**
die Steuerung der Bildschirmanzeige (15) über einen am Bedienhebel (1) angeordneten, gegenüber dem Bedienhebel (1) drehbares Bedienrad (8) erfolgt:

11. Verfahren nach Anspruch 10,
**dadurch gekennzeichnet, daß**
durch das Drehen des Bedienrades (8) Menüpunkte (18) unter einer feststehenden Bildschirmmarkierung (19) hinweg verschoben werden.

12. Verfahren nach Anspruch 10,
**dadurch gekennzeichnet, daß**
durch das Drehen des Bedienrades (8) eine Bildschirmmarkierung (19) über feststehende Menüpunkte (18) hinweg verschoben wird.

13. Verfahren nach Anspruch 12,
**dadurch gekennzeichnet, daß**
wenn die Bildschirmmarkierung (19) eine Endposition auf der Bildschirmanzeige (15) erreicht hat, bei weiterem Drehen des Bedienrades (8) Menüpunkte (18) unter der dann in der Endposition feststehenden Bildschirmmarkierung (19) hinweg verschoben werden.

14. Verfahren nach einem der Ansprüche 10 bis 13,
**dadurch gekennzeichnet, daß**
bei der Steuerung der Bildschirmanzeige (15) durch Drehung des Bedienrades (8) ein mit dem Bedienrad (8) gekoppelter haptischer Drehsteller (13) mit unterschiedlicher Intensität, die abhängig ist von der Stellung der Bildschirmmarkierung (19) und der Menüpunkte (18) zueinander, die Drehbewegung des Bedienrades (8) unterstützt oder ihr entgegenwirkt.

15. Verfahren nach einem der Ansprüche 10 bis 14,
**dadurch gekennzeichnet, daß**
wenn die Bildschirmmarkierung (19) einen Menüpunkt (18), der das Ende einer Menüliste darstellt, markiert, das Bedienrad (8) darüber hinaus nur mit erhöhtem Kraftaufwand weitergedreht werden kann, indem der mit dem Bedienrad (8) gekoppelte haptische Drehsteller (13) der Drehbewegung entgegenwirkt.

16. Verfahren nach einem der Ansprüche 10 bis 15,
**dadurch gekennzeichnet, daß**
durch Betätigung eines am Bedienhebel (1) angeordneten Schalters die mittels Bildschirmmarkierung (19) markierten Menüpunkte (18) ausgewählt werden.

17. Verfahren nach einem der Ansprüche 10 bis 15,
**dadurch gekennzeichnet, daß**
durch Bewegen des Bedienhebels (1) die mittels Bildschirmmarkierung (19) markierten Menüpunkte (18) ausgewählt werden.
